# EUROPÄISCHE PATENTSCHRIFT

(11) **EP 1 232 054 B1**
(45) Veröffentlichungstag und Bekanntmachung des Hinweises auf die Patenterteilung: **27.08.2003**
(21) Anmeldenummer: 00977486.0
(22) Anmeldetag: 04.11.2000
(51) Int. Cl.: B29C 47/88, B29C 47/90

(54) **VERFAHREN UND VORRICHTUNG ZUM KÜHLEN UND KALIBRIEREN VON EINEM PROFIL**
METHOD AND DEVICE FOR COOLING AND CALIBRATING A SECTION
PROCEDE ET DISPOSITIF POUR REFROIDIR ET CALIBRER UN PROFILE

(30) Priorität: 08.11.1999 DE 19953704
(43) Veröffentlichungstag der Anmeldung: 21.08.2002
(73) Patentinhaber: Topf Kunststofftechnik Gesellschaft MbH, 4560 Kirchdorf (AT)
(72) Erfinder: TOPF, Siegfried, A-4050 Traun (AT)
(74) Vertreter: Stoffregen, Hans-Herbert, Dr. Dipl.-Phys.
(86) Internationale Anmeldenummer: EP0010892
(87) Internationale Veröffentlichungsnummer: WO01034367

(56) Entgegenhaltungen:
- EP-A- 0 788 869
- US-A- 4 054 148
- US-A- 4 530 650
- US-A- 4 750 873
- PATENT ABSTRACTS OF JAPAN vol. 1998, no. 12, 31. Oktober 1998 (1998-10-31) & JP 10 193437 A (SEKISUI CHEM CO LTD), 28. Juli 1998 (1998-07-28)

## Beschreibung

Die Erfindung bezieht sich auf ein Verfahren zum Kühlen und Kalibrieren eines Profils aus Kunststoff, wobei das Profil durch mehrere hintereinander und in einem vorzugsweise unter Unterdruck stehenden Gehäuse wie Tank oder Wanne angeordnete Blenden mit dem Profil entsprechender Öffnung geführt und mittels peripher um das Profil herum angeordneter Düsen mit Kühlfluid wie Flüssigkeit beaufschlagt wird. Ferner bezieht sich die Erfindung auf eine Vorrichtung zum Kühlen und Kalibrieren von einem aus Kunststoff bestehenden Profil umfassend ein mit vorzugsweise Unterdruck beaufschlagbares langgestrecktes Gehäuse wie Wanne oder Tank, in dem hintereinander mehrere Blenden mit jeweils einer Öffnung angeordnet sind, die dem Profil bzw. dessen Außenkontur entspricht und durch die das Profil hindurchführbar ist, sowie mehrere entlang vom Transportweg des Profils angeordnete Kühlfluid wie Flüssigkeit auf das Profil abgebende Düsen.

Um ein von einem Extruder bzw. einem Extrusionswerkzeug kommendes Profil aus Kunststoff abzukühlen und zu kalibrieren, kann das Profil zunächst eine Vakuumtrockenkalibrierstrecke durchlaufen, um sodann mittels Kühlflüssigkeit gekühlt zu werden, wobei gleichzeitig eine Kalibrierung erfolgt.

Zurn Kühlen und Kalibrieren sind Vollbad- und Sprühbadvorrichtungen bekannt. Bei der Vollbadkühlung wird das Profil durch einen mit Wasser gefüllten Tank geführt. Bei der Sprühbadkühlung wird das Profil allseitig mit Wasser besprüht, wobei das Wasser mit einem Absolutdruck zwischen 2 und 4 bar über Düsen versprüht wird, die einen Durchmesser von 1 mm oder mehr aufweisen können. Die Düsen selbst werden vorzugsweise durch in Rohre eingebrachte Schlitze gebildet, die sich entlang des Transportweges des Profils erstrecken.

Auch wenn mit der Sprühbadkühlung eine intensive gleichmäßige Kühlung der Profile auch in Bereichen von Hinterschneidungen möglich ist, entstehen insbesondere aufgrund des hohen Wasserverbrauchs erhebliche Nachteile. Daher gelangen in jüngerer Zeit immer häufiger Vollbadkühlungen zum Einsatz, wie diese zum Beispiel in der EP 0 659 536 B1, dem DE 295 21 996 U1 oder grundsätzlich in der Literaturstelle DE-Z: Plastverarbeiter 30. Jahrgang, 1979, Nr. 6, S. 322 - 328 beschrieben sind. Allerdings zeigen Vollbadkühlungen den Nachteil, dass beim Zuführen der Flüssigkeit Stoßwellen auftreten können, die zu einer unerwünschten Verformung der zu kühlenden und zu kalibrierenden Profile führen können. Bei der Vakuumkalibrierung treten zusätzlich Schwankungen im Unterdruck auf, wodurch ebenfalls das in dem Vollbad zu kühlende und zu kalibrierende Profil unerwünschte Geometrieveränderungen erfahren kann.

Der DE 32 41 005 A1 ist ein Verfahren und eine Vorrichtung zur Kühlung von Hohlprofilen bekannt, bei den bzw. der von Beginn eines jeden Extrusionsvorganges an Wasser mit einem Druck zwischen 2,5 und 4 bar und Druckluft mit einem Druck zwischen 4,5 und 6 bar in das Innere des Hohlprofils gefördert wird und somit das Wasser feinst verteilt auf die Profil innenfläche gelangt, um ein Abkühlen zu erreichen.

Bei einet Einrichtung zum Kalibrieren von Strangpressprofilen aus Kunststoff nach der DE 34 27 277 A1 werden Hohlprofile durch eine Wanne geführt, im Bereich deren 4 Ecken Spritzdüsen angeordnet sind, über die Kühlflüssigkeit auf das Profil abgegeben wird. Dabei kann die Wanne als geschlossener Kasten ausgebildet und mit Vakuum beaufschlagt werden, um eine unerwünschte Verformung des Profils auszuschließen.

Verfahren und Vorrichtungen zum Kühlen und Kalibrieren von Kunststoffprofilen der eingangs genannten Art sind der EP 0 788 869, US 4,054,148 oder US 4,750,873 zu entnehmen.

Der vorliegenden Erfindung liegt das Problem zugrunde, ein Verfahren und eine Vorrichtung der eingangs genannten Art so weiterzubilden, dass die Vorteile sowohl der Sprühbad- als auch der Vollbadkühlung erreicht, jedoch deren Nachteile insgesamt vermieden werden.

Erfindungsgemäß wird zur Lösung des Problems verfahrensmäßig im Wesentlichen vorgeschlagen, dass das Kühlfluid mit einem Druck p mit p ≥ 5 bar jeweils der Düse zugeführt wird, die eine Fluiddurchtrittsöffnung mit einem Durchmesser d mit d ≤ 0,7 mm aufweist. Insbesondere beträgt der Druck des Kühlfluids wie Flüssigkeit 10 bar oder mehr gegenüber Atmosphärendruck und der Durchmesser der Düse weniger als 0,5 mm. Mit diesen Parametern kann ein umfassendes Besprühen des zu kühlenden und zu kalibrierenden Profils erfolgen, ohne dass ein ansonsten in Sprühbadvorrichtungen erforderlicher hoher Wasserverbrauch erfolgt. Vielmehr ist der Wasserbedarf bei gleichdimensionierten Anlagen sogar geringer als bei der Vollbadtechnik. So haben Vergleichsmessungen gezeigt, dass bei gleicher Dimensionierung und Durchsatz bei einer Anlage in Vollbadtechnik im Vergleich zu einer erfindungsgemäßen Kühlung doppelt soviel Wasser benötigt wird. Bei bei ebenfalls gleichdimensionierter Anlage zum Einsatz gelangender Sprühbadkühlung nach dem Stand der Technik, bei dem die Flüssigkeit mit einem Druck zwischen 1 - 3 bar über Atmosphärendruck versprüht wird, ergibt sich sogar ein 3-bis 4-fach höherer Wasserverbrauch.

In Weiterbildung der Erfindung wird vorgeschlagen, dass die Flüssigkeit mittels der Düsen derart versprüht wird, dass sich ein Öffnungssprühwinkel α quer zur Längsrichtung des Profils mit 70° ≤ α ≤ 90°, insbesondere 75° ≤ α ≤ 85° ergibt. Hierdurch ist sichergestellt, dass das Profil peripher im erforderlichen Umfang besprüht und gleichmäßig abgekühlt wird. Letzteres wird insbesondere dadurch sichergestellt, dass - im Gegensatz zur Vollbadkühlung -ein Ansammeln von Luftblasen an der Profiloberfläche ausgeschlossen ist, wodurch anderenfalls in diesen Bereichen nicht die erforderliche Wärmeabfuhr sichergestellt wäre. Ferner wird stets Frischwasser zum Kühlen benutzt, ein Vorteil, den die Vollbadkühlung erkennbar nicht bieten kann. Anstelle von Frischwasser kann auch in der Wanne angesammeltes benutzt werden, das durch einen Kühlkreislauf geführt werden kann.

Zur intensiven gleichmäßigen Kühlung ist des Weiteren vorgesehen, dass zumindest jeweils eine Düse im Bereich einer jeden Ecke eines das Profil umgebenden Vierecks angeordnet und derart auf das Profil ausgerichtet wird, dass von den Durchtrittsöffnungen der in den Ecken angeordneten Düsen ausgehende Normalen sich in einem Bereich schneiden, der von einer Geraden durchsetzt wird, auf der jeweilige Mittelpunkte der hintereinander angeordneten Blenden liegen.

Des Weiteren sieht die Erfindung vor, dass die Flüssigkeit über in entlang gegenüberliegender Seiten des Profils vertikal verlaufenden Geraden angeordnete drei Düsen und/oder über in entlang gegenüberliegenden Seiten des Profils horizontal verlaufenden Geraden angeordnete zwei Düsen versprüht wird. Selbstverständlich können die vertikale Anordnung und die horizontale ausgetauscht und/oder entlang jeder Seite zum Beispiel drei Düsen angeordnet werden.

Eine Vorrichtung der eingangs genannten Art zeichnet sich dadurch aus, dass die Düse eine Öffnung mit einem maximalen Durchmesser d mit d ≤ 0,7 mm aufweist und mit einer Flüssigkeitszufuhr verbunden ist, in der die Flüssigkeit unter einem Druck p mit p ≥ 5 bar steht. Insbesondere weist die Öffnung der Düse einen maximalen Durchmesser d mit d < 0,5 mm auf. Bei der Düse kann es sich insbesondere um eine Lochdüse, gegebenenfalls jedoch auch um eine Schlitzdüse handeln, deren Schlitz quer zur Längsachse des Profils verläuft.

Die Flüssigkeit selbst ist insbesondere mit einem Druck p mit p ≥ 10 bar beaufschlagt. Des Weiteren ist vorgesehen, dass die Düse derart ausgebildet ist, dass ihr quer zum Profil verlaufender maximaler Sprühwinkel α mit 70° ≤ α ≤ 90°, insbesondere 75° ≤ α ≤ 85° beträgt, wobei die Schenkel des Sprühwinkels bzw. -kegels auf aneinandergrenzende Flächen eines gedachten Vierkantprofils ausgerichtet sind.

Insbesondere ist vorgesehen, dass jeweils eine Düse in einer Ecke eines gedachten das Profil umgebenden Rechtecks angeordnet ist. Ferner kann im Mittenbereich vertikal verlaufender Kanten des Rechtecks eine weitere Düse vorgesehen sein.

Die Blenden selbst können in bekannter Weise in Transportrichtung des Profils an von gegenüberliegenden Wandungen des Gehäuses ausgehenden Stützleisten anliegen, in denen Düsen integriert sind. Alternativ besteht die Möglichkeit, die Blenden zwischen insbesondere zylinderförmigen von gegenüberliegenden Wandungen des Gehäuses ausgehenden Halteelementen wie bolzenartigen Zapfen anzuordnen, wobei zumindest einige der Halteelemente eine Düse aufweisen.

Weitere Einzelheiten, Vorteile und Merkmale der Erfindung ergeben sich aus der nachfolgenden Beschreibung eines der Zeichnung zu entnehmenden bevorzugten Ausführungsbeispiels.

Es zeigen:

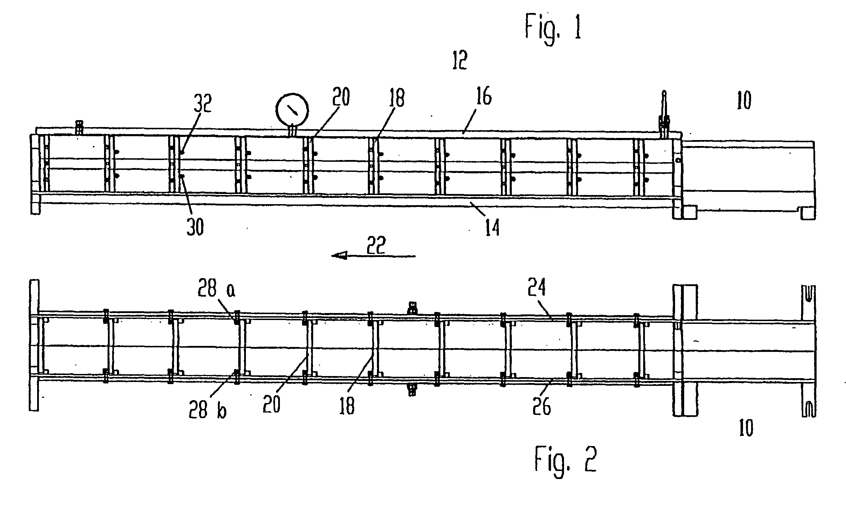

- Fig. 1: eine Vorrichtung einer Extrudieranlage zum Kühlen und Kalibrieren eines Profils in Seitenansicht,
- Fig. 2: die Vorrichtung gemäß Fig. 1 in Draufsicht und
- Fig. 3: einen Querschnitt der Vorrichtung gemäß den Fig. 1 und 2 in vergrößerter Darstellung.

In den Figuren sind Ausschnitte einer Extrudieranlage dargestellt, mit der aus Kunststoff bestehende Profile gewünschter Geometrie wie Hohlkammerprofile, Rohre oder sonstige langgestreckte Elemente gewünschter Querschnittsgeometrie hergestellt werden. Das aus einer nicht dargestellten Extrudierdüse austretende plastische Profil kann dabei zunächst einer Trockenkalibriereinrichtung 10 wie Vakuumkalibriereinrichtung zugeführt werden, der eine Vakuumkalibrierung mittels Sprühtechnik folgt (Vorrichtung 12). Die Vorrichtung 12 umfasst ein langgestrecktes Gehäuse wie Wanne 14, das mit einem Deckel 16 verschließbar ist. Innerhalb der Wanne 14 sind in vorgegebener Teilung Blenden 18, 20 angeordnet, die ihrerseits Durchtrittsöffnungen aufweisen, deren Geometrien der Außenkontur des zu kühlenden und zu kalibrierenden Profils entsprechen. Insoweit wird jedoch auf hinlänglich bekannte Techniken verwiesen. Die Blenden 20 sind insbesondere schwimmend gelagert, wobei die Blenden 18, 20 in Transportrichtung (Pfeil 22) des Profils an von gegenüberliegenden Seitenwandungen 24, 26 der Wanne 14 ausgehenden Stützleisten 28a, 28b anliegen. Auf der gegenüberliegenden Seite der Blende 18, 20 sind bolzenartige Halteelemente 30, 32 vorgesehen. Anstelle von Stützleisten und Halteelementen können auch in den Wandungen 24, 26 nutartige Schlitze zur Aufnahme der Blenden eingebracht sein.

Damit das die Kammer 14 durchlaufende Profil im erforderlichen Umfang intensiv und gleichmäßig gekühlt wird, wird das Profil mit Kühlfluid wie insbesondere Flüssigkeit beaufschlagt wie besprüht. Hierzu sind im Ausführungsbeispiel sechs in einer Ebene angeordnete Düsen 34, 36, 38, 40, 42, 44 vorgesehen, wobei die Ebene quer zur Längsachse des Profils verläuft. Selbstverständlich können die Düsen 34, 36, 38, 40, 42, 44 auch in versetzt zueinander verlaufenden Ebenen angeordnet sein, ohne dass hierdurch die Erfindung verlassen wird. Ausschlaggebend ist jedoch, dass die Düsen 34, 36, 38, 40, 42, 44 Austrittsöffnungen 46 aufweisen, deren maximaler Durchmesser kleiner als 0,7 mm, insbesondere kleiner als 0,5 mm beträgt. Insbesondere handelt es sich bei den Düsen, 34, 36, 38, 40, 42, 44 um Lochdüsen. Des Weiteren ist erfindungsgemäß vorgesehen, dass die über Zuströmleitungen 48, 50 den Düsen 34, 36, 38, 40, 42, 44 zugeführte Flüssigkeit unter einem Druck von mehr als 5 bar über Atmosphärendruck, insbesondere in etwa 10 bar über Atmosphärendruck steht. Hierdurch ist sichergestellt, dass die Flüssigkeit feinverteilt in hinreichender Menge über die Düsen 34, 36, 38, 40, 42, 44 versprüht wird, wobei die Öffnungskegel bzw. -winkel der Düsen 34, 36, 38, 40, 42, 44 derart ausgelegt sind, dass das die Blenden 18, 20 durchsetzende Profil peripher gleichmäßig besprüht wird, so dass eine intensive gleichmäßige Kühlung auch in Hinterschneidungen erfolgt, ein Vorteil, der insbesondere in der Vollbadkühlung nicht immer erzielbar ist. Außerdem wird durch die Sprühtechnik sichergestellt, dass sich keine Luftblasen - wie bei der Vollbadtechnik - anlagern können, wodurch andernfalls in diesen Bereichen eine erforderliche Wärmeableitung nicht erfolgen könnte.

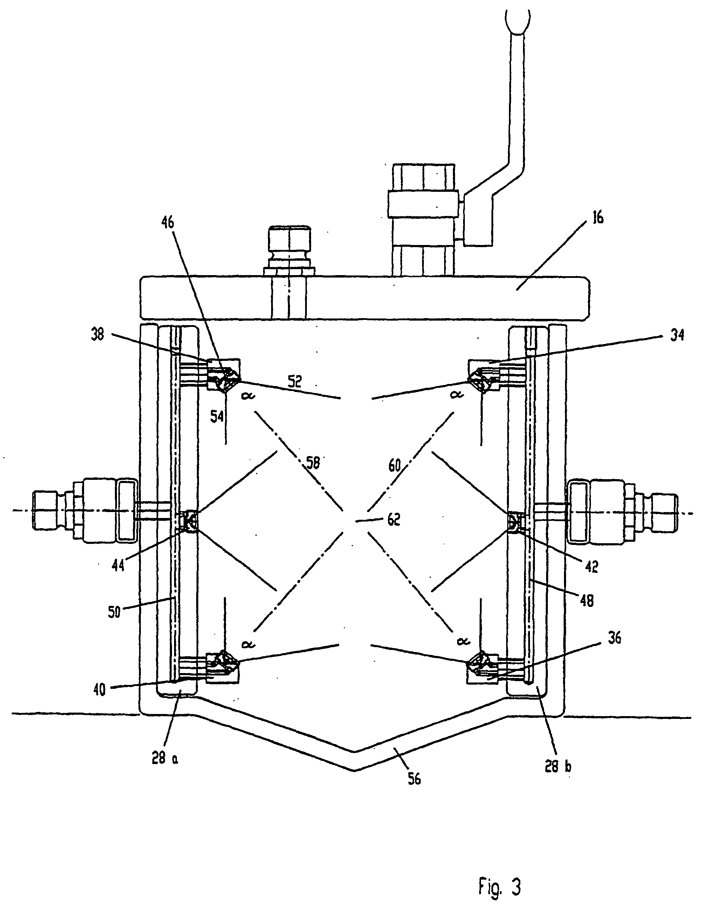

Wie die zeichnerische Darstellung gemäß Fig. 3 verdeutlicht, ist jeweils eine Düse 34, 36, 38, 40 in einer Ecke eines gedachten Vierecks angeordnet, welches das Profil umgibt. Ferner ist jeweils im Mittenbereich einer Längskante des Vierecks eine weitere Düse, im Ausführungsbeispiel die Düse 42 bzw. 44 angeordnet.

Zumindest die im Eckbereich verlaufenden Düsen 34, 36, 38, 40 sollten derart ausgebildet sein, dass der jeweilige von den Schenkeln 52, 54 begrenzte Öffnungswinkel α der zu versprühenden Flüssigkeit im Bereich zwischen 70 - 90°, insbesondere im Bereich von 80° liegt. Dabei sind die Begrenzungsstrahlen der versprühten Flüssigkeit derart auf das zu kühlende Profil ausgerichtet, dass diese entlang aneinandergrenzender Schenkel eines gedachten Vierkantprofils verlaufen.

Ferner gehen von den Düsen 34, 36, 38, 40 Normale 58, 60 aus; die sich in einer Linie 62 schneiden, in der die Blenden 18, 20 mit ihren Mittelpunkten liegen.

Wie die Schnittdarstellung gemäß Fig. 3 verdeutlicht, gehen die Düsen 34, 36, 38, 40, 42, 44 von den Stützleisten 28a, 28b der Blenden 18, 20 aus. Erstere üben demnach eine Doppelfunktion aus. Selbstverständlich können die Düsen auch von gesonderten Halterungen der Wanne 14 ausgehen oder in den bolzenförmigen Halteelementen 30, 32 integriert werden.

Die Wanne 14 weist einen im Schnitt V-förmig ausgebildeten Boden 56 auf, durch den eine Ablaufrinne für die versprühte Flüssigkeit gebildet wird. Hierdurch ist sichergestellt, dass sich in der Wanne 14 nicht in einem Umfang Flüssigkeit ansammeln kann, dass die bodenseitig verlaufenden Düsen 36, 40 bedeckt werden und somit nicht mehr funktionsfähig wären.

Sofern eine Vakuumkalibrierung erfolgt, sollte in der Wanne bzw. dem Tank 14 ein gegenüber Atmosphärendruck um 0,01 - 0,1 bar reduzierter Druck herrschen.

## Patentansprüche

1. Verfahren zum Kühlen und Kalibrieren eines Profils aus Kunststoff, wobei das Profil mehrere hintereinander und in einem vorzugsweise unter Unterdruck durch stehenden Gehäuse wie Tank oder Wanne angeordnete Blenden mit dem Profil entsprechender Öffnung geführt und mittels peripher um das Profil herum angeordneter Düsen mit Kühlfluid wie Flüssigkeit heaufschlagt wird,
**dadurch gekennzeichnet,**
**dass** das Kühlfluid mit einem Druck p mit p ≥ 5 bar der jeweils eine Fluiddurchtrittsöffnung mit einem Durchmesser d mit d ≤ 0,7 mm aufweisenden Düse zugeführt wird.

2. Verfahren nach Anspruch 1,
**dadurch gekennzeichnet,**
**dass** das Kühlfluid wie Flüssigkeit mit einem Druck p mit p ≥ 10 bar den Düsen zugeführt wird.

3. Verfahren nach Anspruch 1 oder 2,
**dadurch gekennzeichnet,**
**dass** das Kühlfluid wie Flüssigkeit über die einen Durchmesser d mit d ≤ 0,5 mm aufweisende Düsen versprüht wird.

4. Verfahren nach zumindest einem der vorhergchenden Ansprüche,
**dadurch gekennzeichnet,**
**dass** das Kühlfluid wie Flüssigkeit mittels der Düsen derart versprüht wird, dass sich ein Sprühwinkel α quer zur Längsrichtung des Profils mit 70° ≤ α ≤ 90°. insbesondere 75° ≤ α ≤ 85° ergibt.

5. Verfahren nach zumindest einem der vorhergehenden Ansprüche,
**dadurch gekennzeichnet,**
**dass** zumindest jeweils eine Düse im Bereich einer jeden Ecke eines das Profil umgebenden Vierecks angeordnet und derart auf das Profil ausgerichtet wird, dass von den Durchtrittsöffnungen der in den Ecken angeordneten Düsen ausgehende Normalen sich in einem Bereich schneiden, der von einer Geraden durchsetzt wird, auf der jeweiliger Mittelpunkt der hintereinander angeordneten Blenden liegen.

6. Verfahren nach zumindest einem der vorhergehenden Ansprüche,
**dadurch gekennzeichnet,**
**dass** das Kühlfluid wie Flüssigkeit über in entlang gegenüberliegender Seiten des Profils vertikal verlaufenden Geraden angeordnete drei Düsen und/oder über in entlang gegenüberliegender Seiten des Profils horizontal verlaufenden Geraden angeordnete zwei Düsen versprüht wird.

7. Vorrichtung (12) zum Kühlen und Kalibrieren von einem aus Kunststoff bestehenden Profil umfassend ein vorzugsweise mit Unterdruck beaufschlagbares Gehäuse (14) wie Wanne oder Tank, in dem hintereinander mehrere Blenden (18, 20) mit jeweils einer Öffnung angeordnet sind, die dem Profil bzw. dessen Außenkontur entspricht und durch die das Profil hindurchführbar ist, sowie mehrere entlang vom Transportweg des Profils angeordnete Kühlfluid wie Flüssigkeit auf das Profil abgebende Düsen (34, 36, 38, 44, 42, 44),
**dadurch gekennzeichnet,**
**dass** die Düse (34, 36, 38, 40, 42, 44) eine Öffnung d mit d ≤ 0,7 mm aufweist und mit einer Kühlfluidzufuhr (48, 50) verbunden ist, in der das Kühlfluid unter einem Druck p mit p ≥ 5 bar steht.

8. Vorrichtung nach Anspruch 7,
**dadurch gekennzeichnet,**
**dass** die Öffnung (46) der Düse (34, 36, 38, 40, 42, 44) einen maximalen Durchmesser d mit d ≤ 0,5 mm aufweist.

9. Vorrichtung nach Anspruch 7 oder 8,
**dadurch gekennzeichnet,**
**dass** die Düse (34, 36, 38, 40, 42, 44) eine Lochdüse ist.

10. Vorrichtung nach zumindest einem der vorhergehenden Ansprüche,
**dadurch gekennzeichnet,**
**dass** die Düse eine Schlitzdüse ist.

11. Vorrichtung nach zumindest einem der vorhergehenden Ansprüche,
**dadurch gekennzeichnet,**
**dass** das Kühlfluid wie Flüssigkeit mit einem Druck p mit p ≥ 10 bar beaufschlagt ist.

12. Vorrichtung nach zumindest einem der vorhergehenden Ansprüche,
**dadurch gekennzeichnet,**
**dass** die Düse (34, 36, 38, 40, 42, 44) derart ausgebildet ist, dass ihr quer zum Profil verlaufender Sprühwinkel α mit 70 ° ≤ α ≤ 90°, insbesondere 75° ≤ α ≤ 85° beträgt.

13. Vorrichtung nach zumindest einem der vorhergehenden Ansprüche,
**dadurch gekennzeichnet,**
**dass** jeweils eine Düse (34, 36, 38, 40) in einer Ecke eines gedachten das Profil umgebenden Rechtecks angeordnet ist.

14. Vorrichtung nach zumindest einem der vorhergehenden Ansprüche,
**dadurch gekennzeichnet,**
**dass** im Mittenbereich vertikal verlaufender Kanten des Rechtecks eine weitere Düse (42, 44) angeordnet ist.

15. Vorrichtung nach zumindest einem der vorhergehenden Ansprüche,
**dadurch gekennzeichnet,**
**dass** die zumindest in einer Ecke des Vierecks angeordnete Düse (34, 36, 38, 40) mit ihrer Öffnung (46) eine Ebene aufspannt, deren Normale (58, 60) eine Gerade (62) schneidet, auf der die hintereinander angeordneten Blenden (18, 20) mit ihren Mittelpunkten liegen.

16. Vorrichtung nach zumindest einem der vorhergehenden Ansprüche,
**dadurch gekennzeichnet,**
**dass** die Blenden (18, 20) in Transportrichtung des Profils an von gegenüberliegenden Wänden (24, 26) des Gehäuses (14) ausgehenden Stützleisten (28a, 28b) anliegen, in denen Düsen integriert sind.

17. Vorrichtung nach zumindest einem der vorhergehenden Ansprüche,
**dadurch gekennzeichnet,**
**dass** die Blenden (18, 20) an vorzugsweise zylinderförmigen, von gegenüberliegenden Wänden (14, 16) des Gehäuses (14) ausgehenden Halteelementen (30, 32) wie bolzenartigen Zapfen anliegen, wobei zumindest einige der Halteelemente eine Düse aufweisen.

## Claims

1. A method for cooling and calibrating a section of plastic, where the section is introduced, via a matched opening, into a preferably evacuated housing such as a tank or bath, comprising several panels arranged one behind the other, and acted upon with a cooling fluid, for example a liquid, by means of jets arranged peripherally around the section;
**characterized in**
**that** the cooling fluid is supplied with a pressure p of p ≥ 5 bar to the jet, which itself has a passage opening for the fluid with a diameter d of d ≤ 0.7 mm.

2. Method according to Claim 1,
**characterized in**
**that** the cooling fluid, for example a liquid, is supplied to the jets with a pressure p of p ≥ 10 bar.

3. Method according to Claim I or Claim 2,
**characterized in**
**that** the cooling fluid, for example a liquid, is sprayed through the jets having a diameter d of d ≤ 0.5 mm.

4. Method according to at least one of the preceding claims,
**characterized in**
**that** the cooling fluid, for example a liquid, is sprayed by the jets in such a way that a spray angle α transverse to the longitudinal direction of the section of 70° ≤ α ≤ 90° is obtained, in particular 75° ≤ α ≤ 85°.

5. Method according to at least one of the preceding claims,
**characterized in**
**that** at least one jet each is arranged in the area of each comer of a square surrounding the section and is aligned with the section in such a way that normal lines extending from the passage openings of the jets arranged in the corners intersect in an area which is also intersected by a straight line on which lie the respective center points of the panels arranged one behind the other.

6. Method according to at least one of the preceding claims,
**characterized in**
**that** the cooling fluid, for example liquid, is sprayed by three jets arranged in straight lines running vertically along opposite sides of the section and/or through two jets arranged in straight lines running horizontally along opposite sides of the section.

7. A device (12) for cooling and calibrating a section made of plastic, comprising a preferably evacuatable housing (14) such as a bath or tank, in which several panels (18, 20) are arranged one behind the other each with an opening matching the section or its outer contour and through which the section can be introduced, as well as several jets (34, 36, 38, 40, 42, 44) arranged along the transport path of the section and applying a cooling fluid, for example a liquid, to the section,
**characterized in**
**that** the jet (34, 36, 38, 40, 42, 44) has an opening d with d ≤ 0.7 mm and is connected to a cooling fluid supply (48, 50) in which the cooling fluid is under a pressure p of p ≥ 5 bar.

8. Device according to Claim 7,
**characterized in**
**that** the opening (46) of the jet (34, 36, 38, 40, 42, 44) has a maximum diameter d of d ≤ 0.5 mm.

9. Device according to Claim 7 or 8,
**characterized in**
**that** the jet (34, 36, 38, 40, 42, 44) is a hole-type jet.

10. Device according to at least one of the preceding claims,
**characterized in**
**that** the jet is a slot-type jet.

11. Device according to at least one of the preceding claims,
**characterized in**
**that** the cooling fluid, for example liquid, is pressurized by a pressure p of p ≥ 10 bar.

12. Device according to at least on the preceding claims,
**characterized in**
**that** the jet (34, 36, 38, 40, 42, 44) is designed such that its spraying angle a transverse to the section is 70° ≤ α ≤ 90°, in particular 75° ≤ a ≤ 85°.

13. Device according to at least one of the preceding claims,
**characterized in**
**that** in each case a jet (34, 36, 38, 40, 42, 44) is arranged in one corner of an imaginary rectangle surrounding the section.

14. Device according to at least one of the preceding claims,
**characterized in**
**that** a further jet (42, 44) is arranged in the central area of vertically running edges of the rectangle.

15. Device according to at least of the of the preceding claims,
**characterized in**
**that** the jet (34, 36, 38, 40, 42, 44) arranged in at least one corner of the square forms with its opening (46) a plane whose normal line (58, 60) intersects a straight line (62) on which lie the respective center points of the panels (18, 20) arranged one behind the other.

16. Device according to at least one of the preceding claims,
**characterized in**
**that** the panels (18, 20) in the transport direction of the section sit close to supporting gibs (28a, 28b) extending from opposite side walls (24, 26) of the housing (14), with jets being integrated into said supporting gibs.

17. Device according to at least one of the preceding claims,
**characterized in**
**that** the panels (18, 20) sit close to preferably cylindrical holding elements (30, 32) such as pin-like journals extending from opposite walls (14, 16) of the housing (14), with at least some of the holding elements having a jet.

## Revendications

1. Procédé pour refroidir et calibrer un profilé en plastique, le profilé étant amené dans plusieurs diaphragmes ayant une ouverture correspondant au profilé, disposés les uns derrière les autres dans un boîtier de préférence sous dépression, tel un bac ou une cuve, et étant attaqué au moyen de tuyères disposées périphériquement autour du profilé par un fluide réfrigérant tel qu'un liquide,
**caractérisé en ce que**
le fluide réfrigérant est amené avec une pression p de la tuyère, avec p ≥ 5 bars présentant respectivement un orifice de passage pour le fluide avec un diamètre d avec d ≤ 0,7 mm.

2. Procédé selon la revendication 1,
**caractérisé en ce que**
le fluide réfrigérant tel qu'un liquide est amené à une pression p des tuyères, avec p ≥ 10 bars.

3. Procédé selon la revendication 1 ou 2,
**caractérisé en ce que**
le fluide réfrigérant tel qu'un liquide est vaporisé par les tuyères présentant un diamètre d, avec d ≤ 0,5 mm.

4. Procédé selon au moins une des revendications précédentes,
**caractérisé en ce que**
le fluide réfrigérant tel qu'un liquide est vaporisé au moyen des tuyères de telle sorte qu'un angle de vaporisation α transversal à la direction longitudinale du profilé a un ordre de grandeur de 70° ≤ α ≤ 90°, particulièrement 75° ≤ a ≤ 85°.

5. Procédé selon au moins une des revendications précédentes,
**caractérisé en ce que**
au moins une tuyère est disposée respectivement au niveau de chaque coin d'un carré entourant le profilé et configurée sur le profilé de telle sorte que les normales issues des orifices de passage des tuyères disposées dans les coins se coupent dans une zone traversée par une droite, sur laquelle se trouvent les milieux respectifs des diaphragmes disposés les uns derrière les autres.

6. Procédé selon au moins une des revendications précédentes,
**caractérisé en ce que**
le fluide réfrigérant est vaporisé comme liquide par trois tuyères disposées sur des droites s'étendant verticalement le long des faces opposées du profilé, et/ou par deux tuyères disposées sur des droites s'étendant horizontalement le long des faces opposées du profilé.

7. Dispositif (12) pour refroidir et calibrer un profilé en plastique comprenant un boîtier (14) de forme oblongue, tel un bac ou une cuve, de préférence sous dépression, dans lequel plusieurs diaphragmes (18, 20) sont disposés les uns derrière les autres avec respectivement une ouverture chacun qui correspond au profilé, respectivement à son contour extérieur, et par lesquels le profilé peut être introduit, et dans lequel plusieurs tuyères (34, 36, 38, 40, 42, 44) délivrant un fluide réfrigérant tel qu'un liquide sur le profilé sont disposées le long de la voie d'acheminement du profilé,
**caractérisé en ce que**
la tuyère (34, 36, 38, 40, 42, 44) présente un orifice d avec d ≤ 0,7 mm et est reliée à une amenée de fluide réfrigérant (48, 50) dans laquelle le fluide réfrigérant a une pression p, avec p ≥ 5 bars.

8. Dispositif selon la revendication 7,
**caractérisé en ce que**
l'orifice (46) de la tuyère (34, 36, 38, 40, 42, 44) présente un diamètre maximal d, avec d ≤ 0,5 mm.

9. Dispositif selon la revendication 7 ou 8,
**caractérisé en ce que**
la tuyère (34, 36, 38, 40, 42, 44) est une tuyère à trous.

10. Dispositif selon au moins une des revendications précédentes,
**caractérisé en ce que**
la tuyère est une tuyère à fente.

11. Dispositif selon au moins une des revendications précédentes,
**caractérisé en ce que**
le fluide réfrigérant tel qu'un liquide est soumis à une pression p, avec p ≥ 10 bars.

12. Dispositif selon au moins une des revendications précédentes,
**caractérisé en ce que**
la tuyère (34, 36, 38, 40, 42, 44) est configurée de telle sorte que son angle de vaporisation α s'étendant transversalement au profilé a un ordre de grandeur de 70° ≤ α ≤ 90°, particulièrement 75° ≤ α ≤ 85°.

13. Dispositif selon au moins une des revendications précédentes;
**caractérisé en ce que**
une tuyère (34, 36, 38, 40) est disposée respectivement dans un coin d'un rectangle imaginaire entourant le profilé.

14. Dispositif selon au moins une des revendications précédentes,
**caractérisé en ce que**
une autre tuyère (42, 44) est disposée au centre des arêtes d'un rectangle s'étendant verticalement.

15. Dispositif selon au moins une des revendications précédentes,
**caractérisé en ce que**
la tuyère (34, 36, 38, 40) disposée au moins dans un coin du carré déploie un plan avec son ouverture (46) dont la normale (58, 60) coupe une droite (62), sur laquelle se trouvent les milieux respectifs des diaphragmes (18, 20) les uns derrière les autres.

16. Dispositif selon au moins une des revendications précédentes,
**caractérisé en ce que**
les diaphragmes (18, 20) reposent dans la direction de transport du profilé contre des barrettes de guidage (28a, 28b) partant des parois latérales (24, 26) opposées du boîtier (14), dans lesquelles sont intégrées des tuyères.

17. Dispositif selon au moins une des revendications précédentes,
**caractérisé en ce que**
les diaphragmes (18, 20) reposent contre des organes d'arrêt (30, 32) en particulier de forme cylindrique et partant des parois opposées (14, 16) du boîtier (14), tels des chevilles en forme de boulon, au moins quelques-uns des organes d'arrêt présentant une tuyère.
